# EUROPEAN PATENT APPLICATION

(11) **EP 4 484 180 A1**
(43) Date of publication of application: **01.01.2025**
(21) Application number: 24183665.9
(22) Date of filing: 21.06.2024
(51) Int. Cl.: B60C 13/04, B60C 15/06, B60C 1/00

(54) **TIRE HAVING A SIDEWALL WITH MULTIPLE LAYERS**

(30) Priority: 29.06.2023 US 202318343800
(71) Applicant: The Goodyear Tire & Rubber Company, Akron, OH 44316 (US)
(72) Inventor: DIMONTE, Jonathan Michael, Stow, Ohio, 44224 (US); DRISCOLL, Michael Thomas, Norton, Ohio, 44203 (US); MUTCH, Steven Wayne, Summerfield, North Carolina, 27358 (US); ALDRICH, Stephen Gilbert, North Lawrence, Ohio, 44666 (US); FETTY, Kathy Avon, Magnolia, Ohio, 44643 (US); GRUND, Mark Allen, Tallmadge, Ohio, 44278 (US); ISITMAN, Nihat Ali, Palo Alto, California, 94306 (US); SARFF, Justin Francis, Fayetteville, North Carolina, 28303 (US)
(74) Representative: Kutsch, Bernd

(57) **Abstract**

A tire (1) is disclosed comprising a tread (10), at least one carcass ply (3, 4), a pair of bead portions (13), and a pair of sidewalls. Each sidewall of the pair of sidewalls extends between the tread (10) and a respective bead portion of the pair of bead portions. At least one sidewall of the pair of sidewalls comprises a first circumferential sidewall layer (2) and a second circumferential sidewall layer (20), the second circumferential sidewall layer (20) extending along an axially inner side of the first sidewall layer (2) between the first sidewall layer (2) and an adjacent carcass ply (3, 4).

## Description

### Field of the Invention

The present invention is directed to a tire comprising a sidewall including at least a first sidewall layer and a second sidewall layer. Moreover, the present invention is directed to a method of building such a tire.

### Background of the Invention

Modern pneumatic tires are supposed to meet many different performance requirements such as advanced grip, low rolling resistance, and/or high abrasion resistance. For some applications, it is also desirable that tires are particularly robust, for instance in the case of off-the-road applications. For example, such applications may require robust tread, belt, and/or casing constructions. While progress has been made over the past decades in the development of robust tires, such as for off-the-road applications, significant room for improvement remains.

### Summary of the Invention

The invention relates to a tire in accordance with claim 1.

Dependent claims refer to preferred embodiments of the invention.

In a first preferred aspect, the present invention is directed to a tire comprising a tread, at least one carcass ply, a pair of bead portions, and a pair of sidewalls, wherein each sidewall of the pair of sidewalls extends between the tread and a respective bead portion of the pair of bead portions. At least one sidewall of the pair of sidewalls comprises a first circumferential sidewall layer and a second circumferential sidewall layer extending along an axially inner side of the first sidewall layer, between the first sidewall layer and an adjacent carcass ply.

In a second preferred aspect, the invention is directed to a method of building a tire comprising a pair of sidewalls, wherein the method comprises the step of providing at least one sidewall of the pair of sidewalls with a first sidewall layer and a second sidewall layer.

### Brief Description of the Drawings

The invention will be described by way of example and with reference to the accompanying drawings in which:
FIG. 1 is a schematic cross-sectional view of a tire in accordance with a first embodiment of the present invention; and
FIG. 2 is a schematic cross-sectional view of another tire in accordance with a second embodiment of the present invention.

### Detailed Description of Preferred Embodiments of the Invention

In the first aspect, the present invention is directed to a tire comprising a tread, at least one carcass ply, a pair of bead portions, optionally a pair of chafers, and a pair of sidewalls, wherein each sidewall of the pair of sidewalls extends between the tread and a respective bead portion of the pair of bead portions. At least one sidewall of the pair of sidewalls comprises a first circumferential sidewall layer and a second circumferential sidewall layer (at least partially) extending along an axially inner side of the first sidewall layer, between the first sidewall layer and an adjacent carcass ply.

Such a sidewall construction having at least two layers allows to provide more robust tires. It is also possible to provide the sidewall with different properties, such as by providing each layer with a different rubber composition and/or geometry. This allows tuning overall sidewall properties to meet desired performance and/or robustness criteria.

In one embodiment, the second sidewall layer extends over one or more of: a radial height corresponding to at least 50%, preferably at least 60%, of the total radial height of the first sidewall layer; a radial height corresponding to at most 90% of the total radial height of the first sidewall layer. Thus, each of the sidewall layers does not only extend over the (whole) circumferential direction but also perpendicular to the circumferential direction.

Length and/or thickness measurements are made herein on the tire in the absence of inflation pressure and load, in an unmounted state (i.e., not mounted to a rim).

In another embodiment, the tire further comprises at least one pair of chafers comprising a first chafer in contact with one or more of the first sidewall layer and the second sidewall layer. In particular, one chafer of the pair of chafers is provided on each lateral/axial side of the tire. It is also possible that the tire comprises for instance two pairs of chafers, wherein one chafer of each pair is provided on each lateral/axial side of the tire.

In still another embodiment, the first sidewall layer at least partially covers, or in other words overlaps with, the first chafer on an axially outer side of the first chafer.

In still another embodiment, at least a radially inner half, or radially inner two thirds, of (preferably the total radial height of) the first sidewall layer is visible on the tire surface, or in other words outer tire surface.

In still another embodiment, the second sidewall layer contacts the first chafer at a radially outer end portion of the first chafer. Preferably the second sidewall layer does not overlap with the first chafer.

In still another embodiment, the second sidewall layer and the first chafer overlap by at most 5%, preferably by at most 2%, of the total radial height of the first chafer.

In yet another embodiment, the second sidewall layer has (along 90% of its extension from its radially outer end to its radially inner end) a thickness within a range of 50% to 300% (preferably 80% to 250%) of an adjacent carcass ply. Alternatively, the second sidewall layer has a thickness within a range of 105% and 300% of an adjacent carcass ply. In particular, this carcass ply is preferably the radially outermost carcass ply, determined in the equatorial plane of the tire. The thickness is determined perpendicular to the surface of the second sidewall layer and/or carcass ply. In addition, or alternatively, said thickness can be within a range of 0.5 mm to 5 mm, or 1.5 mm to 5 mm, or 1 mm to 5 mm, or 1 mm to 2 mm, or preferably 0.5 mm to 2 mm.

In still another embodiment, the first sidewall layer is over at least 80% of its extension over a radial height thicker, preferably at least 2 times thicker, than the second sidewall layer, determined perpendicular to the axially outer surface of the first sidewall layer (along the radial height).

In still another embodiment, the tire further comprises a belt portion comprising one or more belts (the belt portion being preferably arranged radially between the tread and the at least one carcass ply in a crown region of the tire), wherein said at least one sidewall extends to a position (radially) between an axially outer portion of a radially innermost belt and the at least one carcass ply, and wherein, optionally, an (axially inner) end of the second sidewall layer extends further along the carcass ply towards an equatorial plane of the tire than an (axially inner) end of the first sidewall layer.

In still another embodiment, the first sidewall layer extends further towards a radially innermost position of the tire than the second sidewall layer. In other words, the first sidewall layer overlaps with and/or extends beyond the second sidewall layer towards the respective bead portion of the tire.

In still another embodiment, the radially innermost end of the first sidewall layer extends to a (radially inner) position so as to cover at least (preferably the radially outer) 50% of the total radial height of an adjacent chafer of the tire.

In still another embodiment, a radially outermost end of the first sidewall layer and a radially outermost end of the second sidewall layer are arranged between a radially innermost belt of the tire and the carcass ply.

In still another embodiment, the majority (preferably at least 70%) of the length of an axially outer side of the first sidewall layer between its radially upper end and its radially lower end is visible on the outer surface of the tire, and/or the second sidewall layer is entirely invisible from any position outside of the tire. In other words, the second sidewall layer extends completely within the tire, e.g., below an axially outer surface of the tire.

In still another embodiment, the first sidewall layer comprises a first rubber composition and the second sidewall layer comprises a second rubber composition which is different from the first rubber composition.

In still another embodiment, the first sidewall layer and/or the second sidewall layer are free of reinforcements or reinforcement elements. In particular, the first sidewall layer and/or the second sidewall layer are preferably not textile cord and/or metal cord/wire reinforced. Alternatively, or in addition the first sidewall layer and/or the second sidewall layer, or the first rubber composition and/or the second rubber composition, respectively, are no coating rubber compositions which coat fabrics, wires and/or cords.

In still another embodiment, the first rubber composition has one or more of: a relative volume loss which is at least 5%, preferably at least 10%, lower than the relative volume loss of the second rubber composition, determined with a rotary drum abrasion test according to ASTM 5963, or equivalent; a relative volume loss which is lower than 90 mm³, or lower than 80 mm³, or lower than 70 mm³, (and optionally higher than 40 mm³), also determined with the rotary drum abrasion test according to ASTM 5963, or equivalent; a tensile strength which is at least 10% higher, and optionally at most 200% or 100% higher, than the tensile strength of the second rubber composition; a tensile strength within a range of 12 MPa (or 13 MPa) to 20 MPa; at least 10 phr, preferably at least 20 phr, and/or at most 65 phr more silica than the second rubber composition; and at least 5 phr, or preferably at least 10 phr less oil than the second rubber composition.

Tensile strength and/or elongation at break are determined by a ring sample test based on ASTM D412 or equivalent, percentages are percentages of elongation, respectively strain; tensile strength is stress at break; elongation is elongation at break in percent.

In still another embodiment, the second rubber composition has one or more of: a crack propagation rate which is at least 5%, or at least 10%, or preferably at least 30% lower, and/or at most 90% lower, than the crack propagation rate of the first rubber composition; a crack propagation rate of less than 0.009 mm / min, preferably of less than 0.005 mm/min, and optionally of more than 0.001 mm/min; a tensile strength within a range of 5 MPa to 11 MPa; less than 10 phr of silica, preferably less than 5 phr of silica; and more than 10 phr of oil, preferably up to 30 phr of oil.

Crack propagation and/or the crack propagation rate is determined herein according to ASTM D813, or equivalent. Sometimes this method is also referred to as DeMattia crack propagation test.

In still another embodiment, the tire further has a pair of chafers wherein a first chafer of the pair of chafers, which is adjacent to the first sidewall layer and the second sidewall layer, has a third rubber composition (e.g., a first chafer rubber composition), which is different from each of the first rubber composition and the second rubber composition. The third rubber composition comprises at least 70 phr of filler comprising or selected from one or more of carbon black and silica. Thus, the chafer has a relatively high amount of filler compared to the amount of filler in the first and/or second rubber composition.

In still another embodiment, the third rubber composition comprises from 10 to 50 phr polybutadiene rubber, from 10 to 40 phr of one or more of natural rubber and synthetic polyisoprene, and from 10 phr to 40 phr of styrene butadiene rubber.

In still another embodiment, the first rubber composition comprises one or more of: from 40 phr to 60 phr of polybutadiene rubber; from 60 phr to 40 phr of one or more of natural rubber and synthetic polyisoprene; from 0.1 phr to 40 phr (preferably from 10 phr or 20 phr to 40 phr) of carbon black; from 20 phr to 60 phr of silica; from 0 phr to 10 phr (preferably to 8 phr or 6 phr) of oil.

In still another embodiment, the second rubber composition comprises one or more of: from 40 phr to 75 phr of polybutadiene rubber; from 60 phr to 25 phr of one or more of natural rubber and synthetic polyisoprene; from 30 phr (preferably from 40 phr) to 60 phr of carbon black; from 0 phr to 15 phr (preferably from 0 phr to 5 phr or 10 phr) of silica; and from 10 phr (preferably from 12 phr) to 25 phr of oil.

In still another embodiment, the second rubber composition comprises at least 5 phr, preferably at least 10 phr more polybutadiene rubber than the first rubber composition.

In yet another embodiment, the second rubber composition comprises at least 5 phr, preferably at least 10 phr less natural rubber and/or synthetic polyisoprene than the first rubber composition.

In still another embodiment, the second rubber composition comprises at least 5 phr less filler and/or at least 5 phr more oil than the first rubber composition.

In still another embodiment, the tire is one or more of a pneumatic tire, a passenger car tire, an off-the-road-tire, and a radial tire.

In still another embodiment, the tire comprises one or more of: at least two carcass plies; at most three carcass plies; two carcass plies, three carcass plies, two belt plies or belts, a tread radially covering radially outer ends of the sidewalls; a preferably textile reinforced overlay ply; and one or more textile reinforced carcass plies. Preferably, one or more textile reinforced plies are free of metal reinforcements.

Multiple rubber compositions are mentioned herein which may have various ingredients. Some examples are mentioned below.

In another embodiment, a rubber composition may include at least one or more and/or one or more additional diene-based rubbers, such as one or more of styrene butadiene rubber (SBR, e.g., S-SBR or E-SBR), natural rubber (NR), synthetic polyisoprene (PI), and polybutadiene rubber (BR).

In one embodiment, a synthetic or natural polyisoprene rubber may be used. Synthetic cis-1,4-polyisoprene and natural rubber are as such well known to those having skill in the rubber art. In particular, the cis 1,4-microstructure content may be at least 90% and is typically at least 95% or even higher.

In one embodiment, cis-1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis-1,4-microstructure content ("high cis" content) and a glass transition temperature (Tg) in a range of from -95 °C to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646.

A glass transition temperature, or Tg, of an elastomer represents the glass transition temperature of the respective elastomer in its uncured state. A glass transition temperature of an elastomer composition represents the glass transition temperature of the elastomer composition in its cured state. A Tg is determined as a peak midpoint by a differential scanning calorimeter (DSC) at a temperature rate of increase of 20° C per minute, according to ASTM D3418 or equivalent.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers / elastomers than explicitly mentioned in the claims, provided that the phr value of the claimed rubbers / elastomers is in accordance with claimed phr ranges and the amount of all rubbers / elastomers in the composition results in total in 100 parts of rubber. The terms "compound" and "composition" and "formulation" may be used herein interchangeably, unless indicated otherwise. The terms "rubber" and "elastomer" may also be interchangeably used herein.

In another embodiment, one of the rubber compositions includes from 1 phr to 80 phr, or from 5 phr to 80 phr, of a resin, preferably having a glass transition temperature Tg greater than 20° C. A Tg for resins is determined as a peak midpoint by a differential scanning calorimeter (DSC) at a temperature rate of increase of 10° C per minute, according to ASTM D6604 or equivalent. Preferably, the resin has a softening point above 70° C as determined by ASTM E28 which might sometimes be referred to as a ring and ball softening point. In one embodiment, the rubber composition includes from 10 phr to 60 phr or from 20 phr to 60 phr or from 30 phr to 60 phr of resin, particularly if the rubber composition is a tread cap rubber composition.

In another embodiment, the resin is selected from the group consisting of coumarone-indene resin, petroleum hydrocarbon resin, terpene polymers/resins, styrene/alphamethylstyrene resins, terpene phenol resin, rosin derived resins and copolymers and/or mixtures thereof.

A coumarone-indene resin preferably contains coumarone and indene as monomer components making up the resin skeleton (main chain). Monomer ingredients other than coumarone and indene which may be incorporated into the skeleton are, for example, methyl coumarone, styrene, alphamethylstyrene, methylindene, vinyltoluene, dicyclopentadiene, cyclopentadiene, and diolefins such as isoprene and piperlyene. Coumarone-indene resins have preferably softening points ranging from 10° C to 160° C (as measured by the ball-and-ring method). Even more preferably, the softening point ranges from 30° C to 100° C.

Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include any C5 species (olefins and diolefines containing an average of five carbon atoms) such as cyclopentadiene, dicyclopentadiene, diolefins such as isoprene and piperylene, and any C9 species (olefins and diolefins containing an average of 9 carbon atoms) such as vinyltoluene, alphamethylstyrene and indene. Such resins are made by any mixture formed from C5 and C9 species mentioned above, and are known as C5/C9 copolymer resins. Petroleum resins are typically available with softening points ranging from 10° C. to 120° C. Preferably, the softening point ranges from 30 to 100° C.

In an embodiment, C5 resins are aliphatic resins made from one or more of the following monomers: 1,3-pentadiene (e.g., cis or trans), 2-methyl-2-butene, cyclopentene, cyclopentadiene, and dicyclopentadiene.

In another embodiment, a C9 resin is a resin made from one or more aromatic monomers, preferably chosen from the group of indene, methylindene, vinyl toluene, styrene and methylstyrene (such as alpha-methylstyrene).

In still another embodiment, a C9 modified resin is a resin (such as a C5 resin) which has been modified or functionalized with one or more aromatic monomers, preferably chosen from the group of indene, methylindene, vinyl toluene, styrene and methylstyrene (such as alpha methylstyrene).

Terpene resins are preferably comprised of polymers of at least one of limonene, alpha pinene, beta pinene and delta-3-carene. Such resins are available with softening points ranging from 10° C to 135° C.

Terpene-phenol resins may be derived by copolymerization of phenolic monomers with terpenes such as limonenes, pinenes and delta-3-carene.

Representative for resins derived from rosins and derivatives thereof are, for example, gum rosin, wood rosin and tall oil rosin. Gum rosin, wood rosin and tall oil rosin have similar compositions, although the amount of components of the rosins may vary. Such resins may be dimerized, polymerized or disproportionated. Such resins may be in the form of esters of rosin acids and polyols such as pentaerythritol or glycol.

A styrene/alphamethylstyrene resin is considered herein to be a (preferably relatively short chain) copolymer of styrene and alphamethylstyrene with a styrene/alphamethylstyrene molar ratio in a range of 0.05 to 1.50. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely its styrene and alphamethylstyrene contents and by its glass transition temperature, molecular weight and molecular weight distribution.

In one embodiment, said resin is partially or fully hydrogenated.

In an embodiment, a rubber composition comprises oil, such as processing oil. Oil may be included in the rubber composition as extending oil typically used to extend elastomers. Oil may also be included in the rubber composition by addition of the oil directly during rubber compounding. Oil used may include both extending oil present in the elastomers, and (process) oil added during compounding. Suitable oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of vegetable oils that can be used include soybean oil, sunflower oil, canola (rapeseed) oil, corn oil, coconut oil, cottonseed oil, olive oil, palm oil, peanut oil, and safflower oil. Soybean oil and corn oil are typically preferred vegetable oils. Glass transition temperatures Tg for oils are determined as a peak midpoint by a differential scanning calorimeter (DSC) at a temperature rate of increase of 10°C per minute, according to ASTM E1356, or equivalent.

In an embodiment, a rubber composition comprises silica, particularly if it is a tread rubber composition. Silica may be for instance pyrogenic/fumed or precipitated silica. In preferred embodiments, precipitated silica is used. Silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area is determined according to ASTM D6556 or equivalent and is described in the Journal of the American Chemical Society, Volume 60, Page 304 (1930). Silica may also be characterized by having a dibutylphthalate (DBP) absorption value in a range of 100 cm³/100g to 400 cm³/100g, alternatively 150 cm³/100g to 300 cm³/100g which is determined according to ASTM D 2414 or equivalent. Silica may have an average ultimate particle size, for example, in the range of 0.01 to 0.05 micron as determined by the electron microscope, although the silica particles may be even smaller, or possibly larger, in size. Ranges of silica use could be for instance between 1 and 120 phr, preferably in a range of between 10 phr and 70 phr herein. Various commercially available silicas may be used, such as, only for example herein, and without limitation, silicas commercially available from PPG Industries under the Hi-Sil trademark with designations 210, 315G, EZ160G; silicas available from Solvay, with, for example, designations of Z1165MP and Premium200MP; and silicas available from EvonikAG with, for example, designations VN2 and Ultrasil 6000GR, 9100GR.

Some examples of pre-treated silicas, which can be used, (i.e., silicas that have been pre-surface treated with a silane) which are suitable for use in the practice of this invention include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries.

In an embodiment, the rubber composition may include carbon black. Representative examples of such carbon blacks include, for instance, N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades.

In one embodiment, a rubber composition may contain sulfur containing organosilicon compounds or silanes. Examples of suitable sulfur containing organosilicon compounds are of the formula:

Z-Alk-Sₙ-Alk-Z I

in which Z is selected from the group consisting of 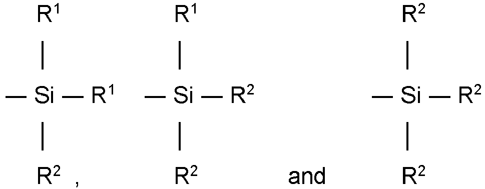 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 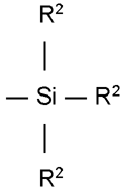 where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. The amount of the compound may range from 0.5 phr to 20 phr, particularly in the case of tread rubber compositions. In one embodiment, the amount will range from 1 phr to 10 phr.

It is readily understood by those having skill in the art that a rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively within a range of 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). The terms "nonproductive" and "productive" mix stages are well known to those having skill in the rubber mixing art. In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be from 1 to 20 minutes.

Vulcanization of the pneumatic tire of the present invention may for instance be carried out at conventional temperatures ranging from 100°C to 200°C. In one embodiment, the vulcanization is conducted at temperatures which are within a range of 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

In the second aspect, the invention is directed to a method of building a tire comprising a pair of sidewalls, wherein the method comprises the step of providing at least one sidewall of the pair of sidewalls with (or including) a first sidewall layer and a second sidewall layer. In other words, the at least one sidewall comprises the first sidewall layer and the second sidewall layer.

In one embodiment, one or more of the first sidewall layer and the second sidewall layer are provided by one or more of extrusion, calendering, and strip lamination.

In another embodiment, the first sidewall layer and the second sidewall layer are extruded together at the same time.

In still another embodiment, the tire is built on a tire building drum.

In still another embodiment, the first sidewall layer and the second sidewall layer are extruded separately, and optionally assembled and/or attached to each other on the tire building drum.

In still another embodiment, the first sidewall layer and the second sidewall layer are attached to each other, optionally essentially in parallel to each other.

In still another embodiment, at least one of the first sidewall layer and the second sidewall layer is strip laminated, optionally on the tire building drum.

In still another embodiment, the first sidewall layer is applied onto the second sidewall layer, wherein, optionally, the first sidewall layer is extruded and the second sidewall layer (covered by the first sidewall layer) is strip laminated, preferably on the tire building drum.

In another embodiment, the first sidewall layer and/or the second sidewall layer is co-extruded with a chafer.

In still another embodiment, the chafer and the second sidewall layer are arranged beside each other, viewed in a cross-section perpendicular to the direction of extrusion.

In still another embodiment, the chafer and the second sidewall layer overlap by less than 5% of a total width of the extruded chafer, viewed in a cross-section perpendicular to the direction of extrusion.

In still another embodiment, the first sidewall layer overlaps with the chafer by at least 10% of the width of the chafer, viewed in a cross-section perpendicular to the direction of extrusion.

In still another embodiment, the first sidewall layer, the second sidewall layer (and optionally the chafer) form together an extruded (preferably flat) strip or band, and/or a tire sidewall component.

In still another embodiment, the first sidewall layer and/or the second sidewall layer (and optionally the chafer) is co-extruded with a shoulder wedge, which preferably contacts the second sidewall layer. Preferably, the shoulder wedge is extruded together with the first sidewall layer, the second sidewall layer, and optionally with the chafer, at the same time. Preferably, the shoulder wedge is extruded at an opposite side of the second sidewall layer than the chafer, viewed in a cross-section perpendicular to the direction of extrusion.

In still another embodiment, the tire is the tire according to the first aspect, and optionally in accordance with one or more of its embodiments.

In still another embodiment, the method of building a tire further comprises one or more steps of: Applying one or more carcass plies, optionally onto an innerliner; Applying two (bead) apexes (e.g., onto the one or more carcass plies); Applying two beads and optionally folding the one or more carcass plies around the beads; Appling at least one pair of chafers; Appling the pair of sidewalls, wherein the at least one sidewall of the pair of sidewalls comprises the first sidewall layer and the second sidewall layer; Applying the belt plies onto the one or more carcass plies and optionally at least partially onto the first and/or second sidewall layer (preferably covering axially inner ends of the first and/or second sidewall layer); Applying an overlay covering the belt plies; Applying the tread, optionally so as to cover at least a portion of the first sidewall layer.

In another embodiment, the first sidewall layer and the second sidewall layer are applied together in/as a single tire component.

In still another embodiment, the tire component further comprises a chafer of said pair of chafers. Thus, the chafer, the first sidewall layer, and the second sidewall layer are applied onto the one or more carcass plies in the form of one tire component. Such a tire component can be an extruded tire component, as mentioned herein above. For instance, extrusion can be carried out with a multiplex extruder, e.g., a triplex extruder in case of the extrusion of two sidewall layers with a chafer, or a quadruplex extruder, in case of the extrusion of two sidewall layers, a chafer and a shoulder wedge.

In still another embodiment, said tire component further comprises a shoulder wedge. If the tire component comprises a shoulder wedge, the belt plies are preferably also attached onto the shoulder wedge so that an axially outer end of the radially innermost belt ply covers the shoulder wedge, and/or preferably also axially inner ends of the first and/or second sidewall layer.

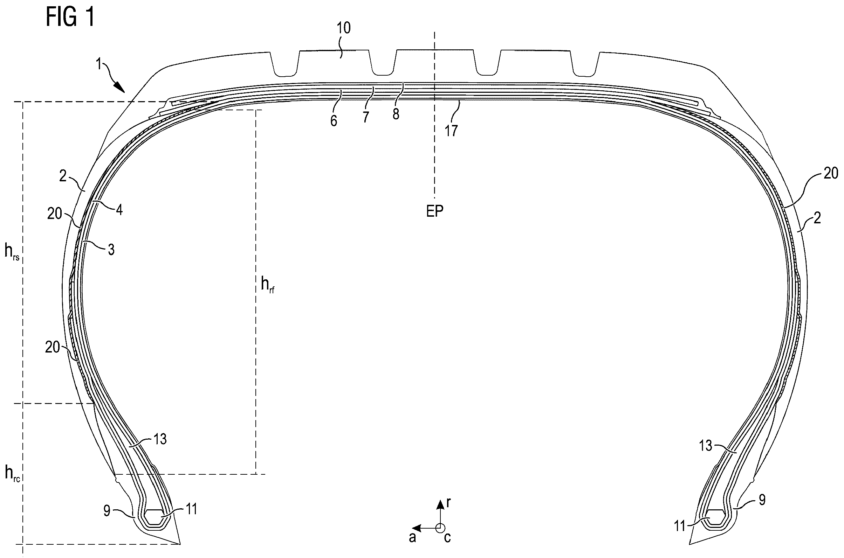

Figure 1 shows a schematic cross-section of a tire 1 in accordance with a preferred embodiment of the present invention. The tire 1 comprises a tread 10, a pair of beads 11, a pair of bead apexes 13, a pair of chafers 9, and a pair of sidewalls wherein each sidewall comprises a first sidewall layer 2 and a second sidewall layer 20. Moreover, the tire 1 comprises two carcass plies 3, 4, two belt plies 6, 7 and an overlay 8. Facing the tire cavity, the tire has an innerliner 17. The second sidewall layer 20 is arranged between an adjacent carcass ply and the axially outer first sidewall layer 2. Thus, each sidewall of the pair of sidewalls has a dual sidewall layer construction. Such a construction can help to improve multiple properties of the tire 1. For example, the combination of the first sidewall layer 2 and the second sidewall layer 20 can improve the robustness of the tire 1. Alternatively, tack (in particular during tire building or assembly) can be improved by the second sidewall layer. The tire could also have further sidewall layers (e.g., three sidewall layers, not shown herein). However, only two sidewall layers 2, 20 as shown in the present embodiment are preferred.

The first sidewall layer 2 extends over a larger radial height (or length) h_{rf} than the second sidewall layer 20 which extends over the radial height (or length) hᵣₛ. Moreover, the first sidewall layer 2 extends with its radially inner end towards a radially inner position covering more than a radially upper half of the total radial height (or length) h_{rc} of the chafer 9. A radially inner end of the second sidewall layer 20 extends to a radially outer end of the chafer 9 and is preferably in contact with the chafer 9. In a crown area of the tire, the radially outer end of the second sidewall layer 20 extends to a position between the radially outer carcass ply 4 and the radially innermost belt ply 6. Also, the first sidewall layer 20 has a radially outer end which terminates between said radially outer carcass ply 4 and the radially innermost belt ply 6. However, the second sidewall layer 20 extends further towards the equatorial plane EP of the tire 1 so as to end at an axial position which is closer to the equatorial plane EP of the tire than the end of the radially outer end of the first sidewall layer 2.

The radial direction r, the axial direction a and the circumferential direction c are indicated in Figure 1 for the sake of improved comprehensibility. The axial direction a is in parallel to the axis of rotation of the tire 1. The radial direction r is perpendicular to said axis of the tire 1 (and the axial direction a). It is also in parallel with the equatorial plane EP of the tire 1. The circumferential direction c is perpendicular to the axial direction a and the radial direction r. It is emphasized that these directions are not limited to specific orientations, unless otherwise indicated herein.

In one embodiment, the first sidewall layer 2 consists of a first rubber composition, e.g., having a high puncture and/or cut resistance. For instance, the rubber composition of the first sidewall layer can preferably comprise from 40 phr to 60 phr of polybutadiene rubber; from 60 phr to 40 phr of one or more of natural rubber and synthetic polyisoprene; 10 phr to 40 phr of carbon black; from 20 phr to 60 phr of silica; and from 0 phr to 8 phr of oil. In particular, the combination of isoprenic rubber, polybutadiene rubber and the blend of carbon black and silica can help to provide improved cut and/or abrasion resistance.

In a specific example of the first rubber composition, the first rubber composition comprises 50 phr of polybutadiene, 50 phr of natural rubber, 30 phr of carbon black, 30 phr of silica, 4 phr of oil, 3 phr of phenolic resin, 1.5 phr of waxes, about 3 phr of a silane, about 5 phr of antidegradants (comprising phenylene diamine types), 2 phr of zinc oxide, 1.5 phr of sulfur, and 1.5 phr of accelerator.

In one embodiment, the second sidewall layer consists of a second rubber composition comprising from 40 phr to 75 phr of polybutadiene rubber; from 60 phr to 25 phr of one or more of natural rubber and synthetic polyisoprene; from 30 phr to 60 phr of carbon black; from 0 phr to 5 phr of silica; and from 10 phr to 25 phr of oil. This second rubber composition has, for instance, only a very limited or even no amount of silica. Moreover, it has more oil than the first rubber composition. Benefits of the second rubber composition are, for example, a better tack, e.g., to an adjacent carcass ply during tire building, and/or a higher crack growth resistance compared with the first rubber composition.

In a specific example, the second rubber composition comprises 65 phr of polybutadiene rubber, 35 phr of natural rubber, 50 phr of carbon black, 15 phr of oil, 3.5 phr of phenolic resin, 1 phr of waxes, 5 phr of antidegradants (comprising phenylene diamine types), 1 phr of stearic acid, 2 phr of zinc oxide, 0.6 phr of accelerators, and 1 phr of sulfur.

The inventors have tested the above mentioned specific first and second rubber compositions with respect to their abrasion properties. The first rubber composition has a relative volume loss of 66 mm³, whereas the relative volume loss of the second rubber composition is 95 mm³ (wherein lower is better, i.e., less volume loss). Thus, providing a sidewall having the first rubber composition in a first (outer layer) significantly improves cut resistance and/or robustness of the tire 1.

Another test, carried out by the inventors for both of the specific examples of the first and second rubber compositions, determines the respective crack propagation rate of these rubber compositions. The crack propagation rate of the second rubber composition is 0.004 mm / min, whereas the same test returns 0.012 mm / min for the first rubber composition.

Lower values are considered to be better in this case. In other words, while the first rubber composition is more resistant to cuts and/or punctures, the second rubber composition is much more robust in relation to crack propagation. By combining the two layers in a sidewall, both properties, i.e., a good cut resistance and a limited crack propagation could be addressed together at the same time.

The first sidewall layer 2 has a lower tack than the second sidewall layer 20 in the present example. Reasons may involve a higher silica content in the outer, first sidewall layer 2 and/or a lower oil content in the first sidewall layer 2 than in the second sidewall layer 20. Thus, a use of only the first rubber composition in a single layer sidewall would have limited tack and could impair the building process of such a tire, particularly in the case of high section height tires (such as greater than 225 mm) and/or thick sidewall components (such as greater than 3.5 mm). In particular, this is the case for some off-road tires.

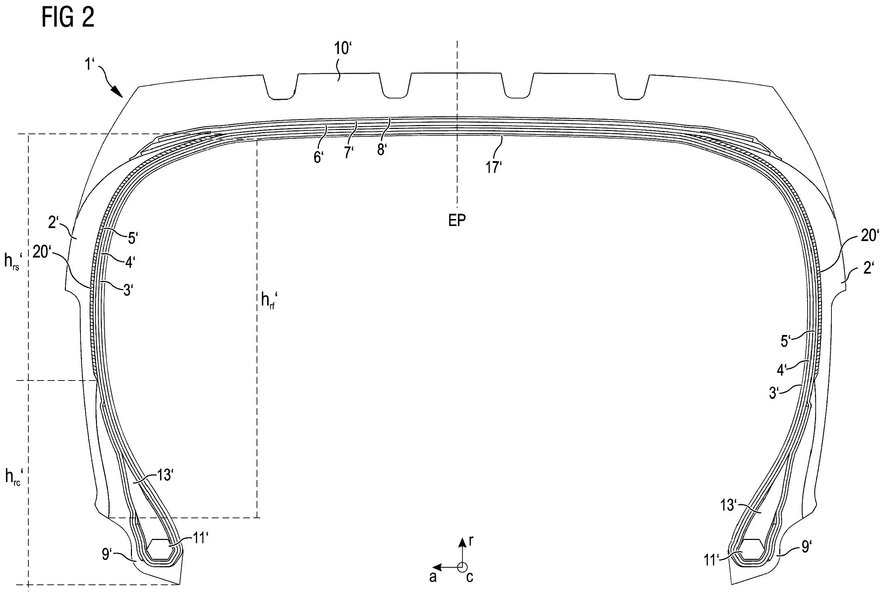

Figure 2 shows another preferred embodiment of a tire 1' comprising a tread 10', in this case three carcass plies 3', 4', 5' (instead of only two carcass plies in tire 1 of Figure 1), two belt plies 6', 7', an overlay 8', an innerliner 17', a pair of beads 11', bead apexes 13', chafers 9', a first sidewall layer 2', as well as a second sidewall layer 20'. The first sidewall layer 2' extends over a radial height h_{rf}', and the second sidewall layer 20' extends over a radial height hᵣₛ'. The chafers 9' extend over a radial height h_{rc}'. The equatorial plane EP of the tire 1' and the axial direction a, the radial direction r, and the circumferential direction c are indicated similarly to Figure 1.

A main difference between the embodiments of Figures 1 and 2 consists in that tire 1' has a three-ply carcass and a radially larger chafer 9'. The rubber compositions suitable for the first sidewall layer 2' and the second sidewall layer 20' are preferably the same or similar as mentioned in relation to the first embodiment of Figure 1.

A chafer rubber composition, which can be described herein as third rubber composition, can for instance comprise from 10 to 50 phr of polybutadiene rubber, from 10 to 40 phr of one or more of natural rubber and synthetic polyisoprene, from 10 phr to 40 phr of styrene butadiene rubber, from 70 phr to 100 phr of filler, e.g. including a majority of carbon black, such as from 70 phr to 90 phr of carbon black, and from 10 phr to 20 phr of oil.

The invention and/or one or more of its embodiments help to provide a robust tire, particularly for off-the-road applications. Such a tire has an advanced casing and/or sidewall construction. Suggested sidewall layouts can be efficiently built.

The embodiments and/or features described herein above, including those of the first and the second aspects of the invention, may be combined with one another.

## Claims

1. A tire comprising a tread (10), at least one carcass ply (3, 4), a pair of bead portions (13), and a pair of sidewalls, wherein each sidewall of the pair of sidewalls extends between the tread (10) and a respective bead portion of the pair of bead portions, wherein at least one sidewall of the pair of sidewalls comprises: a first circumferential sidewall layer (2) and a second circumferential sidewall layer (20), the second circumferential sidewall layer (20) extending along an axially inner side of the first sidewall layer (2) between the first sidewall layer (2) and an adjacent carcass ply (3, 4).

2. The tire according to claim 1, wherein the second sidewall layer (20) extends over a radial height within a range of from 50% to 90% of the total radial height of the first sidewall layer (2).

3. The tire according to claim 1 or 2, wherein the tire (1) further comprises at least one pair of chafers (13) comprising a first chafer in contact with one or both of the first sidewall layer (2) and the second sidewall layer (20), and, optionally, wherein the first sidewall layer (2) at least partially covers the first chafer on an axially outer side of the first chafer and/or the second sidewall layer (20) contacts the first chafer at a radially outer end portion of the first chafer.

4. The tire according to claim 3, wherein the second sidewall layer (20) and the first chafer overlap by at most 5% of the total radial height of the first chafer.

5. The tire according to at least one of the previous claims, wherein the second sidewall layer (20) has, at least along 90% of its extension from its radially outer end to its radially inner end, a thickness of one or both of: i) 50% to 300% of the thickness of an adjacent carcass ply; and ii) 0.5 mm to 5 mm.

6. The tire according to at least one of the previous claims, wherein the first sidewall layer (2) extends further towards a radially innermost position of the tire than the second sidewall layer (20)

7. The tire according to at least one of the previous claims, wherein a radially innermost end of the first sidewall layer (2) extends to a radial position so as to cover at least 50% of the total radial height of an adjacent chafer (9) of the tire.

8. The tire according to at least one of the previous claims, wherein a radially outermost end of the first sidewall layer (2) and a radially outermost end of the second sidewall layer (20) are arranged between a radially innermost belt (6, 7) of the tire and the carcass ply (3, 4).

9. The tire according to at least one of the previous claims, wherein said at least one sidewall extends to a position between an axially outer portion of a radially innermost belt (6, 7) of the tire and the at least one carcass ply (3, 4), and wherein an axially inner end of the second sidewall layer (20) extends further along the carcass ply (3, 4) towards an equatorial plane of the tire than an axially inner end of the first sidewall layer (20).

10. The tire according to at least one of the previous claims, wherein the first sidewall layer (2) is at least two times thicker than the second sidewall layer (20) over at least 80% of the extension of the first sidewall layer (2) over its radial height.

11. The tire according to at least one of the previous claims, wherein the first sidewall layer (2) comprises a first rubber composition and the second sidewall layer (20) comprises a second rubber composition which is different from the first rubber composition.

12. The tire according to at least one of the previous claims, wherein
(i) the first rubber composition has one or more or all of: a relative volume loss which is at least 5% lower than the relative volume loss of the second rubber composition, determined by rotary drum abrasion according to ASTM 5963; a relative volume loss which is lower than 80 mm³, determined by rotary drum abrasion according to ASTM 5963; a tensile strength which is at least 5% higher than the tensile strength of the second rubber composition; a tensile strength of at least 12 MPa; at least 10 phr more silica than the second rubber composition; and at least 5 phr less oil than the second rubber composition; and/or
(ii) the second rubber composition has one or more or all of: a crack propagation rate which is at least 5% lower than the crack propagation rate of the first rubber composition; a crack propagation rate of less than 0.009 mm/min; less than 10 phr of silica; and more than 10 phr of oil.

13. The tire according to at least one of the previous claims, wherein the tire further has a pair of chafers (9) wherein a first chafer, which is adjacent to the first sidewall layer (2) and the second sidewall layer (20), has a third rubber composition, different from the first rubber composition and the second rubber composition, and wherein the third rubber composition comprises:
(i) at least 70 phr of filler selected from one or more of carbon black and silica; and/or
(ii) from 10 phr to 50 phr polybutadiene rubber, from 10 phr to 40 phr of one or more of natural rubber and synthetic polyisoprene, and from 10 phr to 40 phr of styrene butadiene rubber.

14. The tire according to at least one of the previous claims, wherein:
(i) the first rubber composition comprises: from 40 phr to 60 phr of polybutadiene rubber; from 60 phr to 40 phr of one or more of natural rubber and synthetic polyisoprene; from 0.1 phr to 40 phr of carbon black; from 20 phr to 60 phr of silica; and from 0 phr to 8 phr of oil; and/or
(ii) the second rubber composition comprises: from 40 phr to 75 phr of polybutadiene rubber; from 60 phr to 25 phr of one or more of natural rubber and synthetic polyisoprene; from 30 phr to 60 phr of carbon black; from 0 phr to 15 phr of silica; and from 10 phr to 25 phr of oil.

15. The tire according to at least one of the previous claims, wherein the tire is a pneumatic tire comprising one or more of: at least two carcass plies; at most three carcass plies; exactly two belt plies; a tread radially covering radially outer ends of the sidewalls; textile reinforced carcass plies; and a textile reinforced overlay ply.
